# EUROPÄISCHE PATENTSCHRIFT

(11) **EP 2 638 438 B1**
(45) Veröffentlichungstag und Bekanntmachung des Hinweises auf die Patenterteilung: **21.10.2015**
(21) Anmeldenummer: 11782122.3
(22) Anmeldetag: 09.11.2011
(51) Int. Cl.: G05B 9/02

(54) **SCHALTUNGSANORDNUNG MIT EINEM NOT-HALT-SCHALTER EINES HEBEZEUGES**
CIRCUIT ARRANGEMENT HAVING AN EMERGENCY STOP SWITCH OF A HOIST
CIRCUITERIE ÉQUIPÉE D'UN INTERRUPTEUR D'ARRÊT D'URGENCE D'UN ENGIN DE LEVAGE

(30) Priorität: 11.11.2010 DE 102010060506
(43) Veröffentlichungstag der Anmeldung: 18.09.2013
(73) Patentinhaber: Terex MHPS GmbH, 40597 Düsseldorf (DE)
(72) Erfinder: FREITAG, Holger, 44894 Bochum (DE); MACCIONI, Giorgio, 58455 Witten (DE); PERSICO, Giuliano, 58300 Wetter (DE)
(74) Vertreter: Moser Götze & Partner Patentanwälte mbB
(86) Internationale Anmeldenummer: PCT/EP2011/069757
(87) Internationale Veröffentlichungsnummer: WO 2012/062811

(56) Entgegenhaltungen:
- EP-A1- 1 380 533
- DE-A1- 19 962 497

## Beschreibung

Die Erfindung betrifft eine Schaltungsanordnung umfassend eine Hebezeug-Steuerung eines Hebezeuges, einen Hängesteuerschalter mit einem Not-Halt-Schalter und eine die Hebezeug-Steuerung mit dem Hängesteuerschalter elektrisch verbindende Steuerleitung, die mit einer Steuerspannung beaufschlagt ist.

Der Not-Aus-Schalter - auch Not-Aus genannt - und der Not-Halt-Schalter - auch Not-Halt genannt -, sind spezielle Schalter an Maschinen, Fahrzeugen und Anlagen, um diese im Gefahrenfall oder zur Abwendung eines solchen schnell in einen sicheren Zustand zu versetzen. Je nach Einsatzfeld werden verschiedene Strategien verfolgt, im einfachsten Fall folgt der Auslösung eine Unterbrechung der Stromzufuhr. Diese Schalter besitzen ein rotes Betätigungselement auf gelbem Grund. Die häufigste Bauart sind Pilztaster, bei großen Anlagen wie beispielsweise Förderanlagen sind auch Reißleinenschalter (Zugleinenschalter) üblich.

Üblicherweise werden zusammen mit Not-Aus beziehungsweise Not-Halt-Schaltern Schaltgeräte oder Steuerungen eingesetzt, die die notwendigen Anforderungen an die Zuverlässigkeit und weitergehende Sicherheitsaspekte erfüllen, so darf etwa eine Maschine nach dem Not-Halt nicht wieder von selbst anlaufen und es dürfen nicht in jedem Fall alle Komponenten abgeschaltet werden. Not-Halt-Schaltungen werden je nach technischen Bedingungen in Stopp-Kategorien eingeteilt (nach EN 60204-1: Sicherheit von Maschinen - Elektrische Ausrüstung vom Maschinen - Allgemeine Anforderungen). Es wird zwischen den Stopp-Kategorien 0, 1 und 2 unterschieden. In Stopp-Kategorie 0 wird die Energiezufuhr zu den Antriebselementen endgültig getrennt, wenn das plötzliche Abschalten der Energie keine Gefährdung verursacht. Bei der Stopp-Kategorie 1 erfolgt ein geregeltes Stillsetzen. Die Maschine wird in einen sicheren Zustand versetzt, erst dann wird die Energie zu den Antriebselementen endgültig getrennt. Dies ist sinnvoll, wenn Geräte wie beispielsweise Klemmungen oder Bremsen Energie benötigen. In der Stopp-Kategorie 2 wird die Maschine in einen sicheren Zustand versetzt, die Energie aber nicht getrennt. Diese Kategorie sollte nur dann genutzt werden, wenn technisch keine Möglichkeit besteht, gefahrlos die Energie zu trennen. Zum Beispiel würde bei einem Kran mit einem Lasthebemagnet das Abschalten der Spannung am Magnet zum Abstürzen der Last führen.

Bei einem Not-Halt ist es - im Gegensatz zum Not-Aus - nicht gefordert, dass die gesamte Maschine von der Energiezufuhr getrennt wird, sondern es muss ein Antrieb bei Erkennen einer gefahrbringenden Situation zum Schutz vor einer Gefährdung angehalten werden können.

Problematisch ist daher ein Kurzschluss des Not-Aus- beziehungsweise Not-Halt-Schalters selbst oder ein Kurzschluss (auch Querschluss beziehungsweise Aderschluss genannt) in den dazugehörigen Aderleitungen. Solche Kurzschlüsse würden den Not-Aus-beziehungsweise Not-Halt-Schalter kurzschließen und somit seine Schutz-Funktion im Notfall verhindern.

Daher ist es wichtig, dass ein Kurzschluss rechtzeitig und zuverlässig entdeckt wird.

Einige bekannte Möglichkeiten, um die Wahrscheinlichkeit von Quer- beziehungsweise Aderkurzschlüssen zu verringern, sind die feste, geschützte und/oder getrennte Verlegung der Aderleitungen (beispielsweise durch Verlegung im Kabelkanälen oder Panzerrohren oder die Verwendung von unterschiedlichen Mantelleitungen). Damit kann ein Fehlerausschluss für Kurzschlüsse zwischen den Leitern angenommen werden (EN ISO 13849-2 - Anhang D.5.2).

Die oben genannten Maßnahmen sind für Hebezeuge mit Hängeschalter nicht praktikabel: Die Steuerleitung zwischen dem in Bedienerhöhe hängenden Steuerschalter und dem Hebezeug beziehungsweise Kran - typischerweise in Hallenhöhe - ist anwendungsbedingt starken Zugkräften und heftigen Bewegungen ausgesetzt, so dass hier einen Fehlerausschluss für Kurzschlüsse zwischen den Leitern nicht ohne Weiteres auf solche Weise möglich ist.

Weitere bekannte Einrichtungen, wie beispielsweise von der Firma Pilz, besitzen einen Verbraucher, beispielsweise einen Widerstand in Reihe mit dem Schalter, so dass ein Herabsetzen der Spannung auftritt, dessen Fehlen zur Querschluss Entdeckung überwacht wird. Alternativ ist es auch von der Firma Pilz bekannt, die Spannungsversorgung der zwei Kanäle eines Zweikanal-Schalters zeitversetzt für einige Millisekunden abzuschalten und die Eingänge auf eine vorhandene Spannung hin zu prüfen, was auf einen Querschluss hindeutet.

Aus der deutschen Offenlegungsschrift DE 199 62 497 A1 ist bereits eine Schaltungsanordnung zum sicheren Abschalten einer Maschinenanlage bekannt. Die Schaltungsanordnung umfasst im Wesentlichen ein Meldegerät, wie beispielsweise eine Lichtschranke oder einen Not-Aus-Taster, das über eine elektrische Leitung mit einem Sicherheitsschaltgerät verbunden ist. Das Sicherheitsschaltgerät überwacht den Betriebszustand der Maschinenanlage. Hierzu gehören beispielsweise Zustandsgrößen der Maschinenanlage wie Stellung des Not-Aus-Tasters, die Öffnungs- und Schließstellung einer Schutztür oder das Zustandssignal einer Lichtschranke. Ein sicherer Zustand wird hier durch Abschalten der Stromversorgung der Maschinenanlage erreicht. Damit das Sicherheitsschaltgerät unabhängig von dem verwendeten Meldegerät einen Selbsttest seiner Signalwege vornehmen kann, ist vorgesehen, dass innerhalb des Sicherheitsschaltgerätes zwischen einer Eingangsstufe und einer Auswerte- und Abschalteinheit dem Ausgangsignal des Meldegerätes ein periodisches Taktsignal überlagert wird. In der Auswerte- und Abschalteinheit kann dieses Taktsignal wieder heraus gefiltert werden und somit fehlerhafte Querschlüsse innerhalb des Sicherheitsschaltgeräts festgestellt werden.

Aus der europäischen Patentanmeldung EP 1 380 533 A1 ist eine Schaltungsanordnung zur Steuerung eines Krans bekannt. Die Schaltungsanordnung umfasst eine auf einem bidirektionalen Datenbus basierende Kransteuerung sowie einen Hängesteuerschalter mit einem Not-Halt-Schalter. Der Hängesteuerschalter ist über eine Steuerleitung mit der Kransteuerung elektrisch verbunden.

Somit besteht die Aufgabe der vorliegenden Erfindung darin, eine Schaltungsanordnung zur Überwachung eines Not-Halt-Schalters eines Hebezeugs mit Hängeschalter zu schaffen, mit der zuverlässig ein Kurzschluss erkannt werden kann.

Diese Aufgabe wird durch die in Anspruch 1 wiedergegebene Schaltungsanordnung gelöst. Vorteilhafte Ausgestaltungen der Erfindung sind in den Ansprüchen 2 bis 8 angegeben.

Erfindungsgemäß wird einer Schaltungsanordnung umfassend eine Hebezeug-Steuerung eines Hebezeuges, einen Hängesteuerschalter mit einem Not-Halt-Schalter und eine die Hebezeug-Steuerung mit dem Hängesteuerschalter elektrisch verbindende Steuerleitung, die mit einer Steuerspannung beaufschlagt ist, eine zuverlässige Kurzschlusserkennung im Bereich der Steuerleitung und des Not-Halt-Schalters dadurch erreicht, dass dem Not-Halt-Schalter eine Steuerung zugeordnet ist, die der Steuerspannung einen zyklischen Impuls überlagert und in einem Gehäuse des Hängesteuerschalters angeordnet ist, und die Hebezeug-Steuerung derart ausgestaltet ist, dass sie den zyklischen Impuls überwacht und im Falle eines Ausbleibens des zyklischen Impulses das Hebezeug in einen sicheren Zustand schaltet. Die erfindungsgemäße Schaltungsanordnung erhöht die Sicherheit von Hängesteuerschaltern von Hebezeugen, deren von dem jeweiligen Hebezeug herab hängende Steuerleitung während des Betriebs des Hebezeugs stark mechanisch beansprucht wird. Gerade in dieser Steuerleitung können Leitungsbrüche der einzelnen Adern der Steuerleitung auftreten. Mit der erfindungsgemäßen Schaltungsanordnung können ein Kurzschluss des Not-Halt-Schalters sowie die Spannungsübertragung auf beteiligte Adern der Steuerleitung sicher erkannt werden. Somit eignet sich eine entsprechend betriebene Schaltungsanordnung für hohe Risikogruppen, in denen eine Fehlererkennung gefordert ist. Es wird also der geschlossene Zustand also der unbetätigte Zustand des Not-Halt-Schalters auf Kurzschluss hin überwacht. Der offene Not-Halt-Schalter führt ohnehin zu einem sicheren Zustand.

Der Not-Halt-Schalter ist also über eine Steuerleitung mit der Hebezeug-Steuerung verbunden und die Steuerleitung wird mit einer Steuerspannung beaufschlagt, so dass bei einer Änderung der Schalterstellung des Not-Halt-Schalters (geschlossen nach offen bzw. umgekehrt) die Hebezeug-Steuerung die Änderung der Steuerspannung erkennt und eine Funktion auslöst, beispielsweise einen Leistungsschalter wie ein Relais oder ein Schütz (das mehrere kW-Leistung schalten kann) ansteuert, um das Hebezeug stillzusetzen beziehungsweise den Strom abzuschalten.

Damit dies auch einwandfrei funktioniert beziehungsweise ein die Funktion des Not-Halt-Schalters beeinträchtigender Kurzschluss erkannt wird, wird durch eine sich im Not-Halt-Schalter befindliche Steuerung in die Steuerspannung ein Impuls herein-moduliert, dessen Vorhandensein (oder Fehlen) steuerungsseitig mit der Hebezeug-Steuerung überwacht wird. Wird ein Fehlen des Impulses von der Hebezeug-Steuerung festgestellt, so ist klar, dass der Impulserzeuger überbrückt wurde und dass ein Kurzschluss des Not-Halt-Schalters beziehungsweise der Steuerleitung vorliegt, so dass dessen Funktion nicht gewährleistet ist.

Vorteilhafter Weise ist vorgesehen, dass die Hebezeug-Steuerung mit einem Leistungsschalter verbunden ist, der direkt über die Steuerspannung gesteuert wird. Nach der Erfindung wird der zyklische Impuls vorzugsweise mittels der Steuerspannung selbst generiert, d.h. kein Verbraucher verwendet wird, der die Spannung erniedrigt. Durch die erfindungsgemäße zyklische Steuerspannungsmodifikation wird praktisch keine Leistung "vernichtet". Somit kann die Steuerspannung auch direkt als Steuerspannung eines Leistungsschalters wie einem Relais oder eines Schütz verwendet werden. Dies vereinfacht den Aufbau der der kompletten Schaltungsanordnung und erlaubt auch eine Rückwärts-Kompatibilität mit älteren Schaltungsanordnungen.

Die Impulsbreite wird dabei so klein gewählt, dass praktisch kein Leistungsabfall bemerkbar ist und die direkte Ansteuerung eines Relais oder eines Schütz zum Einnehmen des sicheren Not-Haltzustands möglich bleibt. Vorzugsweise beträgt die Impulsbreite weniger als 5 ms, vorzugsweise zwischen 2 und 4 ms.

Unter Relais wird ein durch elektrischen Strom betriebener, meist elektromagnetisch wirkender, fernbetätigter Schalter mit in der Regel zwei Schaltstellungen verstanden. Das Relais wird über einen Steuerstromkreis (Steuerspannung) aktiviert und kann weitere Stromkreise schalten. Unter Schütz wird ein elektrisch oder pneumatisch betätigter oder elektronischer Schalter für große Leistungen verstanden, der einem Relais ähnelt.

In einer besonders vorteilhaften Ausgestaltung ist vorgesehen, dass die Steuerung einen Halbleiterschalter und eine Logik-Einheit zur zyklischen Ansteuerung des Halbleiterschalters umfasst. Sinnvollerweise handelt es sich bei der Logik-Einheit um eine programmierbare Steuerung (beispielsweise einen Mikrokontroller), die programmiert ist, um die Überwachung des Vorhandenseins des Impulses durchzuführen. Ganz besonders hat sich die Eignung eines Halbleiterschalters zur Steuerspannungsveränderung herausgestellt, der als Photo-MOSFET-Relais ausgebildet ist. Photo-MOSFET-Relais ähneln im Aufbau Optokopplern: Sie arbeiten steuerungsseitig wie ein Optokoppler mit einer IR-LED und besitzen lastseitig im Unterschied zu "normalen" Halbleiterrelais keine Triacs oder Thyristoren, sondern MOSFETs, mit denen sie Gleich- und Wechselspannungen bei typischerweise eher geringem Strom schalten können. Sie müssen nicht gekühlt werden und besitzen bei geringem Laststrom einen geringeren Spannungsabfall als Halbleiterrelais, besitzen typischerweise jedoch einen höheren "Kontaktwiderstand" als mechanische Signalrelais. Sie arbeiten prell- und verschleißfrei sowie mit hohen Schaltgeschwindigkeiten (einige Millisekunden), die bei Spezialausführungen Schaltfrequenzen bis zu 100 kHz erreichen können.

Für eine Verwendung der erfindungsgemäßen Steuerung mit einer Wechselspannung-Steuerspannung ist die Steuerung derart ausgebildet, dass der zyklische Impuls durch periodisches Herausschneiden eines Teiles der Steuerspannung erzeugt wird. Bei einer Gleichspannung -Steuerspannung ist die Steuerung derart ausgebildet, dass der zyklische Impuls bei einer Gleichspannung-Steuerspannung durch periodisches kurzzeitiges Abschalten der Steuerspannung erzeugt wird.

Der zyklische Impuls kann dabei bei einer Wechselspannung-Steuerspannung (AC) mittels eines Leistungshalbleiters, insbesondere eines Thyristors, durch Phasenanschnitt - periodisches Herausschneiden eines Teiles der Steuerspannung oder bei einer Gleichspannung-Steuerspannung (DC) mittels eines Leistungshalbleiters durch periodisches kurzzeitiges Abschalten aus der Steuerspannung erzeugt werden.

In einer besonderen Ausgestaltung ist vorgesehen, dass die Steuerung mit dem Not-Halt-Schalter in der Steuerleitung in Reihe geschaltet ist und den Impuls aus der Steuerspannung erzeugt. Alternativ könnte auch eine Bezugsspannung verwendet werden.

Vorteilhafter Weise ist die Steuerung für die Impulserzeugung in einem Gehäuse des Not-Halt-Schalters angeordnet. Somit kann ausgehend von dem Hängesteuerschalter beginnend mit dem Not-Halt-Schalter die anschließende gesamte Steuerleitung bis hin zur Hebezeug-Steuerung überwacht werden, da dort erst das Vorhandensein des Impulses überwacht wird und die Erkennung eines Kurzschlusses in dem Not-Halt-Schalter und der Steuerleitung erfolgt.

Da die Kurzsch(uss-Überwachungseinrichtung über den zyklischen Impuls die Überwachung auf einen Kurzschluss mit minimierten Spannungsverlusten durchführt, ist es sinnvoll, wenn die Steuerung mit einem Relais oder Schütz verbunden ist, das direkt über die Steuerspannung gesteuert wird.

Weitere Einzelheiten, Merkmale und Vorteile der Erfindung ergeben sich aus der nachfolgenden Beschreibung eines Ausführungsbeispiels anhand der Zeichnung, in der
Figur 1 schematisch ein Hebezeug mit einem Hängesteuerschalter,
Figur 2 schematisch eine Steuerung einer Kurzschluss-Überwachungseinrichtung zeigt,
Figur 3 ein schematisches Diagramm des Wechselspannungsverlaufs beim Einsatz der Steuerung nach Figur 2 zeigt und

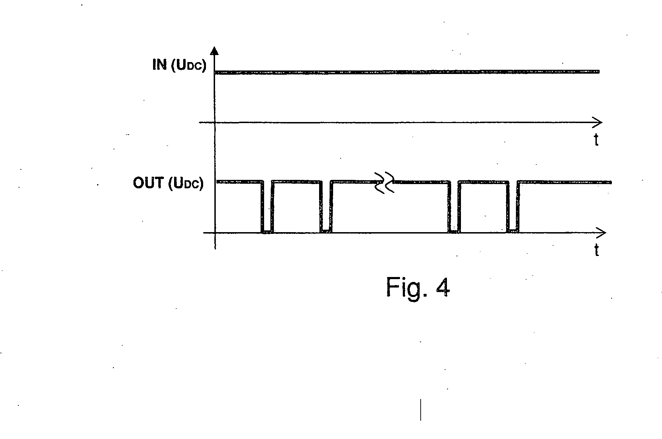

Figur 4 ein schematisches Diagramm des Gleichspannungsverlaufs beim Einsatz der Steuerung nach Figur 2 zeigt.

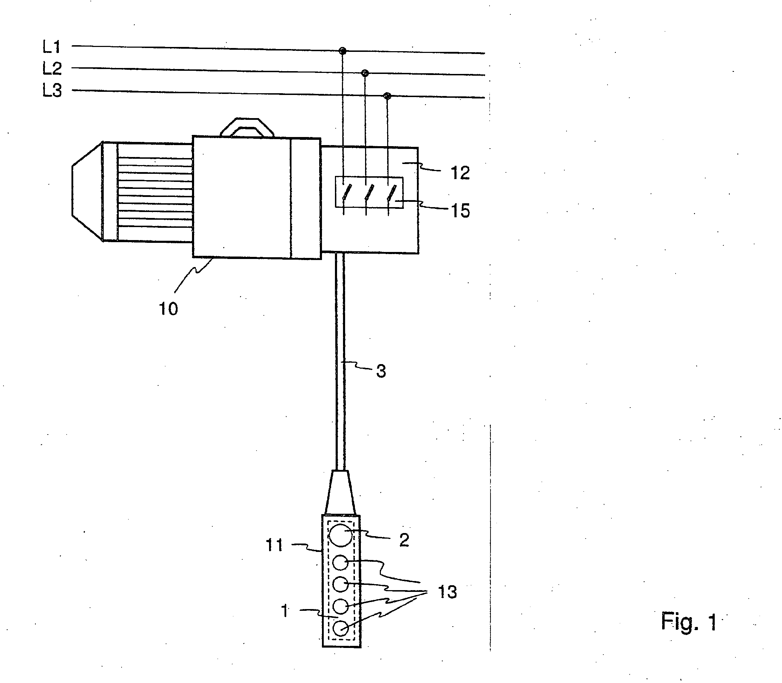

Die Figur 1 zeigt schematisch ein als Kettenzug ausgebildetes Hebezeug 10, an dem über eine Steuerleitung 3 ein Hängesteuerschalter 11 aufgehängt ist. Die Steuerleitung 3 ist in dem Hebezeug 10 elektrisch an eine Hebezeug-Steuerung 12 angeschlossen, die nur schematisch dargestellt ist und über die die Steuer- und Sicherheitssignale des Hängesteuerschalters 11 an Antriebe des Hebezeuges 10 weiter geleitet werden. Hierfür ist die Steuerleitung 3 mit einer Steuerspannung beaufschlagt. Im Bereich des Hängesteuerschalters 11 ist die Steuerleitung 3 elektrisch mit einer Steuerung 1 verbunden, die die Steuerleitung 3 auf Kurzschlüsse überwacht. Der Hängesteuerschalter 11 weist mehrere an seiner Vorderseite mit Betätigungsstößeln herausragende und vertikal über einander angeordnete Schaltelemente 13 auf, über die die Hub- und Senkbewegungen und beispielsweise Fahrbewegungen des Hebezeuges 10 gesteuert werden können. Zusätzlich ist in üblicher weist an der obersten Position in dem Hängesteuerschalter 11 ein Not-Halt-Schalter 2 angeordnet. Außerdem ist die Hebezeug-Steuerung 12 so ausgestaltet, dass eine Änderung der Schalterstellung des Not-Halt-Schalters 2 oder der anderen Schaltelemente 13 erkannt wird und eine entsprechende Funktion ausgelöst, wie beispielsweise ein Bewirken eines sicheren Not-Halts bei geöffnetem Not-Haltschalter 2 oder eines Ansteuern der entsprechenden Antriebe betätigten Schaltelementen 13.

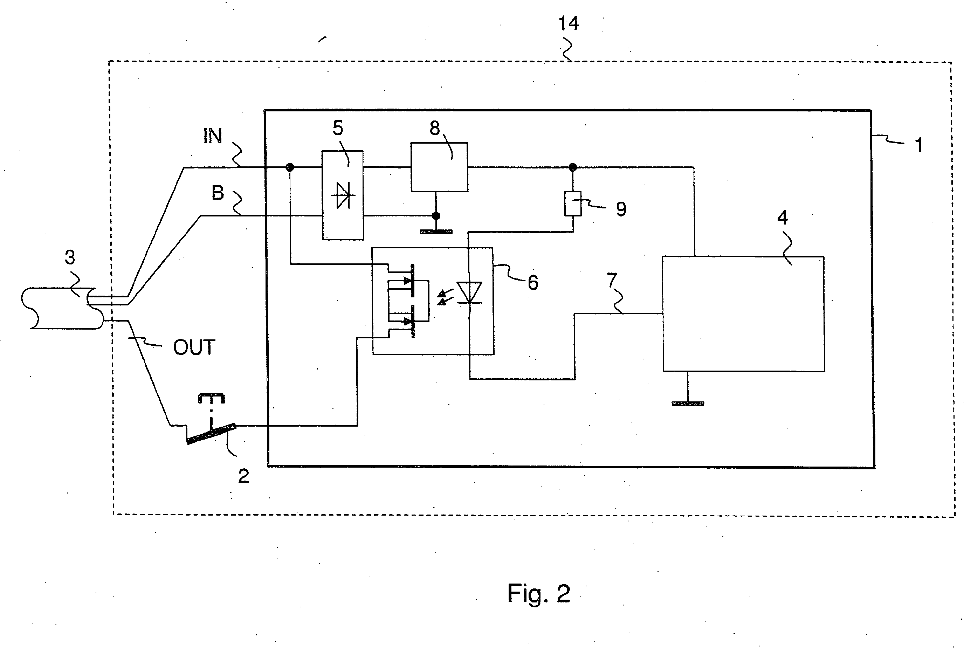

Die Steuerung 1 zur Kurzschluss-Überwachung ist in einem Gehäuse 14 des Hängesteuerschalters 11 Not-Haltschalters 2 angeordnet und in der Figur 2 schematisch als Ganzes mit 1 bezeichnet. Alternativ kann die Steuerung 1 auch in einem Gehäuse des Not-Haltschalters 2 angeordnet sein. In dieser Figur ist der Not-Halt-Schalter 2 schematisch vereinfacht als Schaltsymbol und das Gehäuse 14 als Rahmen angedeutet. Von der Steuerung 1 wird einen zyklischer Impuls in der Steuerspannung erzeugt, so dass die Steuerspannung zum Beinhalten eines Impulses verändert wird. Dieser erzeugte Impuls wird von der Hebezeug-Steuerung 12 überwacht, um einen Kurzschluss zu entdecken.

Ist am Eingang der Hebezeug-Steuerung 12, von der Steuerung 1 kommend, der Impuls nicht detektierbar, obwohl eine Steuerspannung an der Steuerleitung 3 anliegt, so ist klar, dass die Steuerung 1 am Ende des Pfades der Steuerleitung 3 beziehungsweise des Not-Haltschalters 2 überbrückt wurde und somit ein Kurzschluss vorliegt.

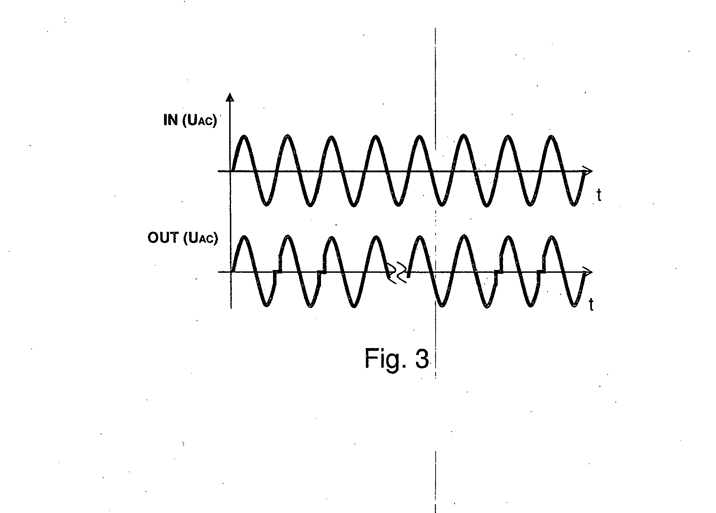

Die Diagramme der Figuren 2 und 3 zeigen beispielhaft die resultierenden Spannungsverläufe für eine Wechsel-Steuerungsspannung U_{AC} (Figur 2) und eine Gleich-Steuerungsspannung U_{DC}(Figur 3) über der Zeit t an dem Eingang IN und dem Ausgang OUT.

Die Steuerung 1 umfasst zwei Eingänge IN und B sowie einen Ausgang OUT, die über die Steuerleitung 3 mit der Hebezeug-Steuerung 12 verbunden sind. In dem Ausgang OUT ist der eigentliche Not-Haltschalter 2 angeordnet.

Die Steuerung 1 wird über den Eingang IN mit der Steuerspannung beaufschlagt, während der Eingang B (Bezug) die Steuerung 1 mit einer Steuerspannung für einen Logik-Einheit 4 in der Steuerung 1 versorgt, die von einem 5V-Regler 8 an den Logik-Einheit 4 gelangt. Die Logik-Einheit 4 ist beispielsweise als Mikro-Kontroller oder Timer ausgebildet.

Da die Steuerung 1 wahlweise mit Gleich- oder Wechselspannung betreibar ist, findet nach dem Eingang der Steuerspannung über den Eingang IN zunächst in einem nachgeschalteten Gleichrichter 5 gegebenenfalls die Umwandlung der Steuerspannung in eine Gleichspannung statt und findet Eingang in den Logik-Einheit 4.

Parallel wird die Steuerspannung von Eingang IN über einen Halbleiterschalter 6 zu dem Ausgang OUT beziehungsweise dem Not-Haltschalter 2 geleitet. Der Halbleiterschalter 6 ist vorzugsweise als Photo-MOSFET-Relais ausgebildet.

In dem Halbleiterschalter 6 wird der zyklische Impuls bei einer Wechselspannung-Steuerspannung (AC) durch periodisches Herausschneiden eines Teiles der Steuerspannung beziehungsweise der zyklische Impuls bei einer Gleichspannung-Steuerspannung (DC) durch periodisches kurzzeitiges Abschalten der Steuerspannung aus derselben erzeugt. Der Impuls innerhalb der Steuerspannung wird also in beiden Fällen durch eine Veränderung derselben erzeugt.

Dazu wird der Halbleiterschalter 6 beziehungsweise dessen Diodenteil von der Logik-Einheit 4 mit einer Signalspannung beaufschlagt, wozu ein Ausgang 7 der Logik-Einheit 4 mit dem Eingang des Diodenteits des Halbleiterschalters 6 verbunden ist. Der zweite Anschluss des Diodenteils des Halbleiterschalters 6 ist über einen Widerstand 9 mit der Spannungsversorgung verbunden. Der Widerstand 9 begrenzt den an dem Diodenteil anliegenden Strom.

Wenn die Signalspannung am Diodenteil des Halbleiterschalters 6 anliegt, ist das Relais 6 geschlossen und die Steuerspannung wird über das Relais 6 von den Eingang IN an den Ausgang OUT weitergeleitet.

Liegt dagegen keine Signalspannung am Diodenteil des Halbleiterschalters 6 an, da die Logik-Einheit 4 das Signal gezielt abgeschaltet hat, wird die Steuerspannung abgeschnitten beziehungsweise nicht weiter geleitet.

Dieses gezielte Abschneiden beziehungsweise Abschalten der Steuerspannung erfolgt zyklisch bei einer Wechseispannung-Steuerspannung (AC) durch periodisches Herausschneiden im Nulldurchgang, so dass möglichst wenig Energie beziehungsweise Leistung verloren geht (vergleiche Figur 2). Bei Gleichspannung-Steuerspannung (DC) erfolgt das periodische kurzzeitige Abschalten für einige wenige Millisekunden (vergleiche Figur 3).

Im Fall des Anliegens einer Wechselspannung-Steuerspannung überwacht die Logik-Einheit 4 die vom Gleichrichter 5 kommende pulsierende Steuerspannung, um den Nulldurchgang bestimmen zu können und koordiniert die Signalspannung abzuschalten, so dass eine Steuerspannung mit zyklischem Impuls am Ausgang OUT entsteht (siehe Figur 2).

Falls Gleichspannung-Steuerspannung anliegt, schaltet die Logik-Einheit 4 zyklisch die Signalspannung am Ausgang 7 ab, so dass eine Steuerspannung mit zyklischem Impuls am Ausgang OUT entsteht (siehe Figur 3). Die Gleichspannung wird über den gleichmäßigen Spannungsverlauf am Eingang der Logik-Einheit 4 detektiert.

Wird der Schalter 2 beziehungsweise die Steuerleitung 3 kurzgeschlossen, fehlt der Impuls, so erkennt die Hebezeug-Steuerung 12 das Fehlen des Impulses und kann einen sicheren Zustand des Hebezeugs 10 herbeiführen.

Da die Steuerung 1 den zyklischen Impuls mit minimierten Spannungsverlusten durchführt, ist es vorgesehen, dass die Hebezeug-Steuerung 12 direkt über die Steuerspannung einen Leistungsschalter 15 wie ein Relais oder ein Schütz ansteuert. Hierbei ist die Impulsbreite so klein gewählt, dass praktisch kein Leistungsabfall bemerkbar ist und die direkte Ansteuerung eines Leistungsschalters 15 zum Einnehmen des sicheren Not-Halt-Zustands möglich bleibt. Vorzugsweise beträgt die Impulsbreite weniger als 5 ms, vorzugsweise zwischen 2 und 4 ms.

Das vorstehende Ausführungsbespiel ist auf die Kurzschlussüberwachung der Steuerleitung 3 und des Not-Halt-Schalters 2 bezogen. Grundsätzlich ist es mit der erfindungsgemäßen Schaltungsanordnung auch möglich, Not-Aus-Schalter oder andere Schaltelemente 13 eines Hängesteuerschalters 11 auf Kurzschluss zu überwachen.

### Bezugszeichenliste

- 1: Steuerung
- 2: Not-Halt-Schalter
- 3: Steuerleitung
- 4: Logik-Einheit
- 5: Gleichrichter
- 6: Halbleiterschalter
- 7: Ausgang
- 8: 5V-Regler
- 9: Widerstand
- 10: Hebezeug
- 11: Hängesteuerschalter
- 12: Hebezeug-Steuerung
- 13: Schaltelemente
- 14: Gehäuse
- 15: Leistungsschalter

- IN: Eingang Steuerspannung
- OUT: Ausgang Steuerspannung
- B: Bezug Steuerspannung
- t: Zeit
- U_{AC}: Gleichspannung
- U_{DC}: Wechselspannung

## Patentansprüche

1. Schaltungsanordnung umfassend eine Hebezeug-Steuerung (12) eines Hebezeuges (10), einen Hängesteuerschalter (11) mit einem Not-Halt-Schalter (2) und eine die Hebezeug-Steuerung (12) mit dem Hängesteuerschalter (11) elektrisch verbindende Steuerleitung (3), die mit einer Steuerspannung beaufschlagt ist, **dadurch gekennzeichnet, dass** dem Not-Halt-Schalter (2) eine Steuerung (1) zugeordnet ist, die der Steuerspannung einen zyklischen Impuls überlagert und in einem Gehäuse (14) des Hängeschalters (11) angeordnet ist, und die Hebezeug-Steuerung (12) derart ausgestaltet ist, dass sie den zyklischen Impuls überwacht und im Falle eines Ausbleibens des zyklischen Impulses das Hebezeug (10) in einen sicheren Zustand schaltet.

2. Schaltungsanordnung nach Anspruch 1, **dadurch gekennzeichnet, dass** die Hebezeug-Steuerung (12) derart ausgestaltet ist, dass sie eine Änderung der Stellung des Not-Halt-Schalters (2) erkennt und eine Funktion des Hebezeugs (10) auslöst.

3. Schaltungsanordnung nach Anspruch 1 oder 2, **dadurch gekennzeichnet, dass** die Steuerung (1) mit dem Not-Halt-Schalter (2) in der Steuerleitung (3) in Reihe geschaltet ist und den Impuls aus der Steuerspannung erzeugt.

4. Schaltungsanordnung nach Anspruch 4, **dadurch gekennzeichnet, dass** die Steuerung (1) den zyklischen Impuls bei einer Wechselspannung-Steuerspannung durch periodisches Herausschneiden eines Teiles der Steuerspannung erzeugt.

5. Schaltungsanordnung nach Anspruch 4, **dadurch gekennzeichnet, dass** die Steuerung (1) den zyklischen Impuls bei einer Gleichspannung-Steuerspannung durch periodisches kurzzeitiges Abschalten der Steuerspannung erzeugt.

6. Schaltungsanordnung nach einem der Ansprüche 1 bis 5, **dadurch gekennzeichnet, dass** die Steuerung (1) einen Halbleiterschalter (6) und eine Logik-Einheit (4) zur zyklischen Ansteuerung des Halbleiterschalters (6) umfasst.

7. Schaltungsanordnung nach einem der Ansprüche 1 bis 6, **dadurch gekennzeichnet, dass** die Hebezeug-Steuerung (12) mit einem Leistungsschalter (15) verbunden ist, das direkt über die Steuerspannung gesteuert wird.

8. Schaltungsanordnung nach einem der Ansprüche 1 bis 7, **dadurch gekennzeichnet, dass** die Steuerung (1) in einem Gehäuse (14) des Not-Halt-Schalters (2) angeordnet ist.

## Claims

1. Circuit arrangement comprising a control system (12) for a lifting apparatus (10), a pendant control switch (11) having an emergency stop switch (2), and a control line (3) which connects the lifting apparatus control system (12) to the pendant control switch (11) electrically and to which a control voltage is applied, **characterised in that** the emergency stop switch (2) has associated with it a control system (1) which superimposes a cyclic pulse on the control voltage and which is arranged in a housing (14) of the pendant switch (11), and the lifting apparatus control system (12) is so designed that it monitors the cyclic pulse and, in the event of the cyclic pulse failing to occur, switches the lifting apparatus (10) to a safe state.

2. Circuit arrangement according to claim 1, **characterised in that** the lifting apparatus control system (12) is so designed that it recognises a change in the position of the emergency stop switch (2) and triggers a function of the lifting apparatus (10).

3. Circuit arrangement according to claim 1 or 2, **characterised in that** the control system (1) is connected in series with the emergency stop switch (2) in the control line (3) and generates the pulse from the control voltage.

4. Circuit arrangement according to claim 4, **characterised in that**, when the control voltage is an AC voltage, the control system (1) generates the cyclic pulse by cyclically cutting out a part of the control voltage.

5. Circuit arrangement according to claim 4, **characterised in that**, when the control voltage is a DC voltage, the control system (1) generates the cyclic pulse by briefly switching off the control voltage cyclically.

6. Circuit arrangement according to one of claims 1 to 5, **characterised in that** the control system (1) comprises a semiconductor switch (6), and a logic unit (4) to actuate the semiconductor switch (6) cyclically.

7. Circuit arrangement according to one of claims 1 to 6, **characterised in that** the lifting apparatus control system (12) is connected to a power switch (15) which is controlled directly by means of the control voltage.

8. Circuit arrangement according to one of claims 1 to 7, **characterised in that** the control system (1) is arranged in a housing (14) of the emergency stop switch (2).

## Revendications

1. Circuit comprenant une commande (12) d'un appareil de levage (10), un commutateur de commande de suspension (11) équipé d'un interrupteur d'arrêt d'urgence (2) et une ligne de commande (3) qui relie électriquement la commande (12) de l'appareil de levage au commutateur de commande de suspension (11) et à laquelle est appliquée une tension de commande, **caractérisé en ce que** l'interrupteur d'arrêt d'urgence (2) est associé à une commande (1) qui superpose à la tension de commande une impulsion cyclique et qui est disposée dans un boîtier (14) du commutateur de suspension (11) et **en ce que** la commande (12) est configurée de façon à surveiller l'impulsion cyclique et commute, en l'absence de l'impulsion cyclique, l'appareil de levage (10) dans un état de sécurité.

2. Circuit selon la revendication 1, **caractérisé en ce que** la commande (12) est configurée de façon à détecter une modification de la position de l'interrupteur d'arrêt d'urgence (2) et à déclencher une fonction de l'appareil de levage (10) déclenche.

3. Circuit selon la revendication 1 ou 2, **caractérisé en ce que** la commande (1) est montée en série avec l'interrupteur d'arrêt d'urgence (2) dans la ligne de commande (3) et génère l'impulsion à partir de la tension de commande.

4. Circuit selon la revendication 4, **caractérisé en ce que** la commande (1) génère l'impulsion cyclique, dans le cas d'une tension de commande alternative, en extrayant périodiquement une partie de la tension de commande.

5. Circuit selon la revendication 4, **caractérisé en ce que** la commande (1) génère l'impulsion cyclique, dans le cas d'une tension de commande continue, en interrompant brièvement et périodiquement la tension de commande.

6. Circuit selon l'une des revendications 1 à 5, **caractérisé en ce que** la commande (1) comprend un commutateur à semi-conducteur (6) et une unité logique (4) servant à commander de façon cyclique le commutateur à semi-conducteur (6).

7. Circuit selon l'une des revendications 1 à 6, **caractérisé en ce que** la commande (12) de l'appareil de levage est reliée à un interrupteur d'alimentation (15) qui est commandé directement par la tension de commande.

8. Circuit selon l'une des revendications 1 à 7, **caractérisé en ce que** la commande (1) est disposée dans un boîtier (14) de l'interrupteur d'arrêt d'urgence (2).
